# EUROPÄISCHE PATENTSCHRIFT

(11) **EP 0 983 938 B1**
(45) Veröffentlichungstag und Bekanntmachung des Hinweises auf die Patenterteilung: **12.05.2004**
(21) Anmeldenummer: 99115437.8
(22) Anmeldetag: 05.08.1999
(51) Int. Cl.: B64D 11/00

(54) **Gepäckablageanordnung in einer Flugzeugpassagierkabine**
Luggage bins for the cabins of passenger aircraft
Coffre à bagages pour la cabine d'un avion de passagers

(30) Priorität: 01.09.1998 DE 19839701
(43) Veröffentlichungstag der Anmeldung: 08.03.2000
(73) Patentinhaber: Airbus Deutschland GmbH, 21129 Hamburg (DE)
(72) Erfinder: Schumacher, Markus, 21614 Buxtehude (DE); Muin, Andrew, 21698 Harsefeld (DE); Franke, Lutz, 21077 Hamburg (DE)
(74) Vertreter: Hansmann, Dierk, Dipl.-Ing.

(56) Entgegenhaltungen:
- EP-A- 0 718 189
- DE-A- 4 130 644

## Beschreibung

Die Erfindung betrifft eine Gepäckablagenanordnung in einer Flugzeugpassagierkabine, die in Flugzeuglängsrichtung angeordnete Mittelgepäckablagen und Seitengepäckablagen aufweist, wobei die Mittelgepäckablagen im Deckenbereich und die Seitengepäckablagen im Seitenwandbereich angeordnet sind.

Üblicherweise werden in einer Passagierkabine eines Flugzeuges Handgepäckstücke in oberhalb der Sitzreihen angeordneten Gepäckablagen, sogenannten Overhead-Stowage-Bins, abgelegt. Mehrere Gepäckablagen sind über den Sitzreihen in Flugzeuglängsrichtung nebeneinander angeordnet und haben einen vom Gang erreichbaren Öffnungsbereich. Gepäckablagen in einer Flugzeugpassagierkabine werden in zunehmendem Maße auch mit einer absenkbaren Schale ausgestattet, wie beispielsweise aus DE 41 30 644 C2 bekannt ist. Damit ist der Zugriff für Passagiere zum Gepäckablagenraum erleichtert, da insbesondere für kleinere Passagiere bei den recht hoch angeordneten Gepäckablagen die Ladehöhe den Zugriff erschwert. Trotzdem ist die Anwendung von absenkbaren Gepäckablagen nur begrenzt, da Nachteile wie hohes Gewicht, bewegliche Teile für die Absenkung u. a. für die Ausstattung mit dieses Gepäckablagen berücksichtigt werden müssen.

In EP 0 718 189 A1 wird ein Umrüstsatz für Gepäckablagen in einem Flugzeug beschrieben. Es sollen an vorhandene Tragstrukturen im Flugzeug neue, größere Überkopf-Gepäckablagen angebaut werden können im Austausch zu den Original-Gepäckablagen. Der obere Befestigungspunkt der Gepäckbox an der Tragstruktur ist nach der Umrüstung nur über ein zusätzliches Bauteil erreichbar; was mit einem höherem Gewicht und einem höheren Montageaufwand verbunden ist.

Das der EP 0 718 189 A1 zugrundeliegende Problem besteht darin, auf eine vorhandene Haltestruktur für Gepäckablagen eines Verkehrsflugzeuges neue Gepäckboxen zu setzen. Eine flexible Höhenveränderung einer vorhandenen Gepäckablagenanordnung (kein Austausch und kein Umrüsten der Gepäckablagen) ist mit einer derartigen Lösung nicht zu realisieren.

Der Erfindung liegt daher die Aufgabe zugrunde, eine Gepäckablagenanordnung in einer Flugzeugpassagierkabine zu schaffen, die die oben genannten Nachteile beseitigt und für die Airlines die Möglichkeit bietet, flexibel und mit nur einem geringen Montageaufwand die Gepäckablagen an unterschiedliche Zugriffshöhen und unterschiedliche Konfigurationen des Kabinenlayouts anzupassen.

Diese Aufgabe wird bei einer gattungsgemäßen Vorrichtung mit den im Patentanspruch 1 genannten Maßnahmen gelöst.

Dabei ist insbesondere von Vorteil, daß eine kostengünstige Möglichkeit für die flexible Anpassung von Gepäckablagenanordnungen an Kundenwünsche möglich ist. So kann eine Airline eine Flugzeugpassagierkabine entsprechend des Einsatzortes des Flugzeuges nur mit einem geringen Montageaufwand umrüsten und beispielsweise bei Flügen im asiatischen Bereich, in dem die Körpergröße der Passagiere generell kleiner ist, die gesamte Gepäckablagenanordnung absenken. Den Airlines wird somit bei Bedarf die Möglichkeit einer flexiblen Anpassung der Flugzeugkabine gegeben. Vorteilhaft ist ebenfalls, daß unterschiedliche Gepäckablagen (absenkbare und feste, kleine und große) modular innerhalb der Flugzeugkabine angeordnet werden können und aufgrund der frei hängenden Gepäckablagen ohne Störung der Gesamtkontur unterschiedliche Gepäckablagentypen und -größen harmonisch in der Passagierkabine integriert werden können.

Weiterbildungen und vorteilhafte Ausgestaltungen sind in den Unteransprüchen 2 bis 8 angegeben.

In der Zeichnung ist ein Ausführungsbeispiel der Erfindung dargestellt, das nachstehend anhand der Figuren 1 bis 7 näher beschrieben wird. In den Figuren sind gleiche Bauteile mit gleichen Bezugszeichen versehen.

Es zeigt
- Fig. 1: eine Perspektivdarstellung eines Ausschnittes einer Flugzeugpassagierkabine, in der eine Gepäckablagenanordnung mit Mittelgepäckablagen und Seitengepäckablagen vorgesehen ist,
- Fig. 2: ein Querschnitt durch die Mittelgepäckablage mit höhenverstellbarer Trägerverkleidung,
- Fig. 3: ein Querschnitt durch die Mittelgepäckablage gemäß Fig. 2 mit einem kleineren Gepäckablagentyp,
- Fig. 4: ein Querschnitt durch die Seitengepäckablage mit höhenverstellbarer Trägerverkleidung,
- Fig. 5: ein Querschnitt durch die Seitengepäckablage gemäß Fig. 4 mit einem kleineren Gepäckablagentyp,
- Fig. 6: eine Perspektivdarstellung eines Teiles der Flugzeugpassagierkabine mit Flugzeugverkleidungsteilen im Bereich der höhenverstellbaren Mittelgepäckablagen und
- Fig. 7: die Flugzeugverkleidungsteile gemäß Fig. 6 in Seitenansichten.

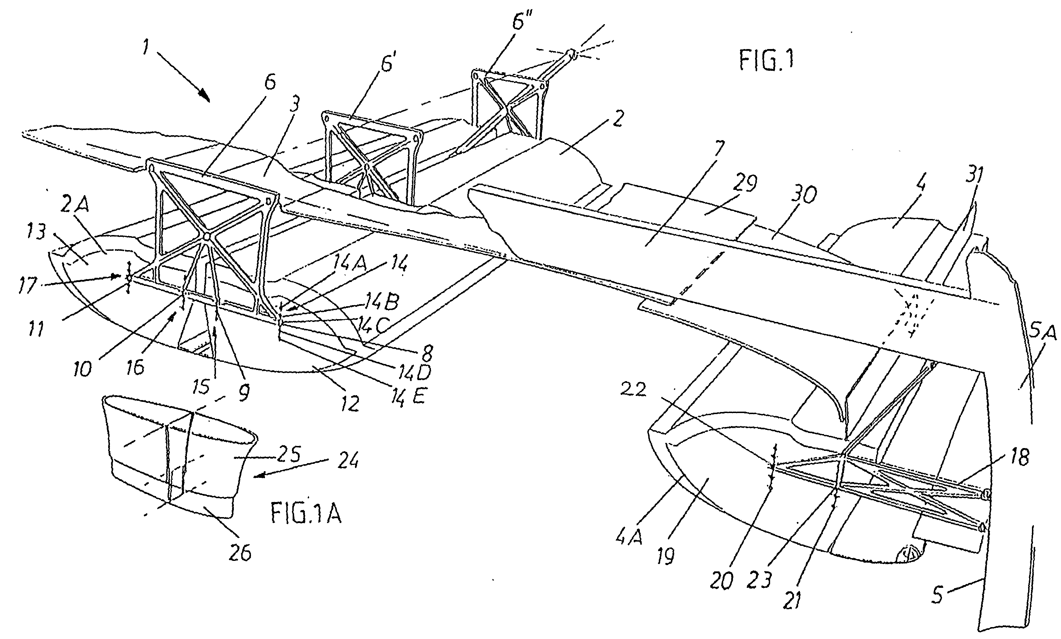

In Fig. 1 ist ein Teil einer Flugzeugpassagierkabine 1 in der Perspektivdarstellung ersichtlich. Dieser Kabinenausschnitt zeigt die Anordnung von Mittelgepäckablagen 2, die normalerweise in Flugzeuglängsrichtung im Deckenbereich 3 über mittlere Sitzreihen (nicht gezeigt) der Flugzeugkabine 1 vorgesehen sind, sowie die Anordnung von Seitengepäckablagen 4, die in Flugzeuglängsrichtung im Bereich der Seitenwände 5, beispielsweise an einem Spant 5A, befestigt werden.

Die Mittelgepäckablagen 2 sind über mehrere Träger 6, 6'und 6" mit einem Ende an der Flugzeugstruktur befestigt. Diese Befestigung ist aus Gründen der Übersichtlichkeit nicht gezeigt, kann aber beispielsweise an einem Deckenträger 7 erfolgen. Das andere Ende des Trägers 6, 6' und 6" weist Anschlußelemente 8, 9, 10 und 11 zur Befestigung der Mittelgepäckablagen 2 auf. Die Anschlußelemente 8 und 9 halten den rechten Teil der Mittelgepäckablage 2 und die Anschlußelemente 10 und 11 halten den linken Teil der Mittelgepäckablage 2. Die Träger 6, 6', 6" müssen so ausgebildet sein, daß zwischen dem Deckenbereich 3 und der Oberkante der Gepäckablage ausreichend Platz für eine Höhenverstellung der Gepäckablage vorhanden ist. Mit den Trägern 6, 6', 6" sind die Gepäckablagen 2 von der Decke "abgehängt". An den Seitenwänden 12 und 13 der linken und rechten Mittelgepäckablage 2 sind Lochraster 14, 15, 16 und 17 vorgesehen, die als Anschlußpunkte für die Anschlußelemente 8, 9, 10 und 11 dienen. Die Lochraster 14, 15, 16 und 17 weisen mehrere, übereinander angeordnete Bohrungen auf, wie in Fig. 1 beispielhaft gezeigt an den Bohrungen 14A, 14B, 14C, 14D und 14E. Die Anschlußelemente 8, 9, 10, 11 können als Anschlußbolzen ausgebildet sein, der in die entsprechende Bohrung eingeführt und dort befestigt wird.

Aufgrund dieser Lochraster 14, 15, 16 und 17 können die Gepäckablagen 2 auf verschiedene Höhen eingestellt werden. Damit ist möglich, daß gesamte Gepäckablagenanordnungen 2 in einer Flugzeugkabine 1 entsprechend des Bedarfes um eine, durch die Lochraster 14, 15, 16 und 17 vorbestimmte Höhe abgesenkt oder erhöht werden können. Damit kann auch eine modulare Gepäckablagenanordnung realisiert werden, da aufgrund der einstellbaren Höhe auch kleine und große Gepäckablagen entsprechend des Bedarfes (siehe eine kleinere Gepäckablage 2A bzw. 4A, die in die Gepäckablage 2 bzw. 4 eingezeichnet wurde) an den Trägern angeordnet werden können, ohne einen großen Aufwand zur Umrüstung in Kauf zu nehmen. Die Seitengepäckablage 4, die über einen Träger 18 an der Rumpfstruktur, vorzugsweise im Seitenwandbereich 5 am Spant 5A befestigt wird, ist ebenfalls mit mindestens einem Lochraster 20 versehen. Zur besseren Stabilität der Gepäckablage 4 ist als Halterung ein weiteres Lochraster 21 vorgesehen. Die Lochraster 20 und 21 sind beidseitig an den Seitenwänden 19 der Gepäckablage 4 angeordnet. Anschlußelemente 22 und 23 greifen in die entsprechende Bohrung am Lochraster 20 und 21, um eine vorbestimmte Höhe der Seitengepäckablage bei der Montage zu erreichen. #Mit einem geringen Montageaufwand kann die Flugzeugkabine somit den entsprechenden Bedürfnissen angepaßt werden und die Gepäckablagenanordnung 2 bzw. 4 kann beispielsweise für den asiatischen Bereich abgesenkt werden.

Dafür ist es weiterhin notwendig, daß die Verkleidungsteile entsprechend ausgebildet sind und trotz einer Höhenverstellung der Gepäckablagen keine Spalte oder Öffnungen entstehen, die einen Blick auf Struktur- und Ausrüstungsteile des Flugzeuges ermöglichen und somit einen Eindruck einer schlechten Verarbeitungsqualität vermitteln. Um dies zu verhindern, sind die Verkleidungsteile entsprechend ausgestaltet.

Ersichtlich ist in der Teilfigur 1 A eine Trägerverkleidung 24, die den jeweiligen Träger 6, 6' oder 6" der Mittelgepäckablage verhüllen kann und aufgrund ihrer Ausbildung an eine Höhenverstellung der Gepäckablagen anpaßbar ist. Die Trägerverkleidung 24 ist dafür aus einem inneren Verkleidungteil 26 und einem äußeren Verkleidungsteil 25 aufgebaut. Diese hüllenförmigen Verkleidungsteile 25 und 26 sind ineinander einschiebbar bzw. teleskopierbar. Eine weitere, nicht gezeigte Ausgestaltung könnte eine einteilige Verkleidung sein, die entsprechend der benötigten Höhe auseinanderzuziehen oder zusammenzudrücken ist, wie beispielsweise ein Faltenbalg.

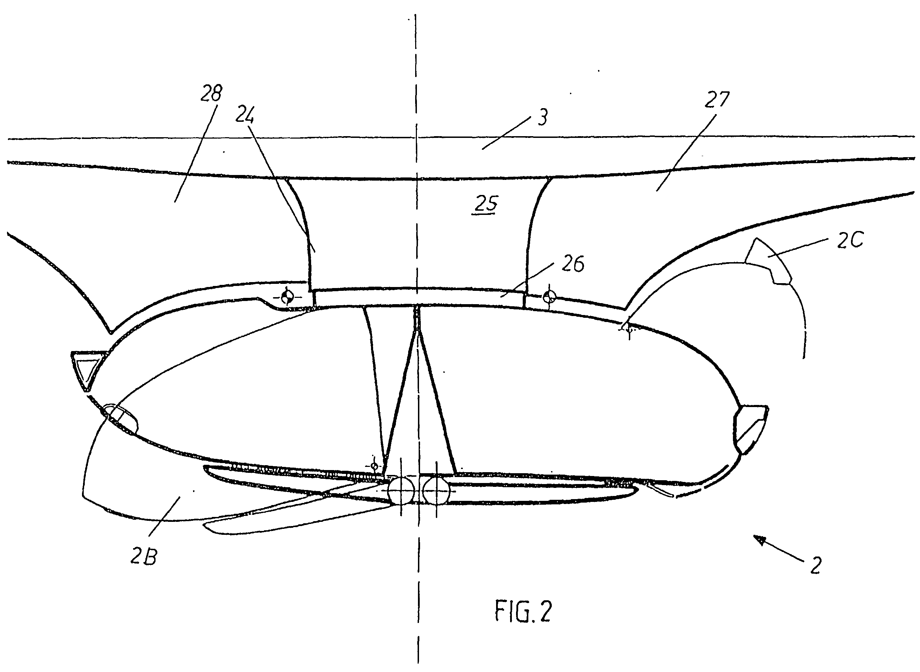

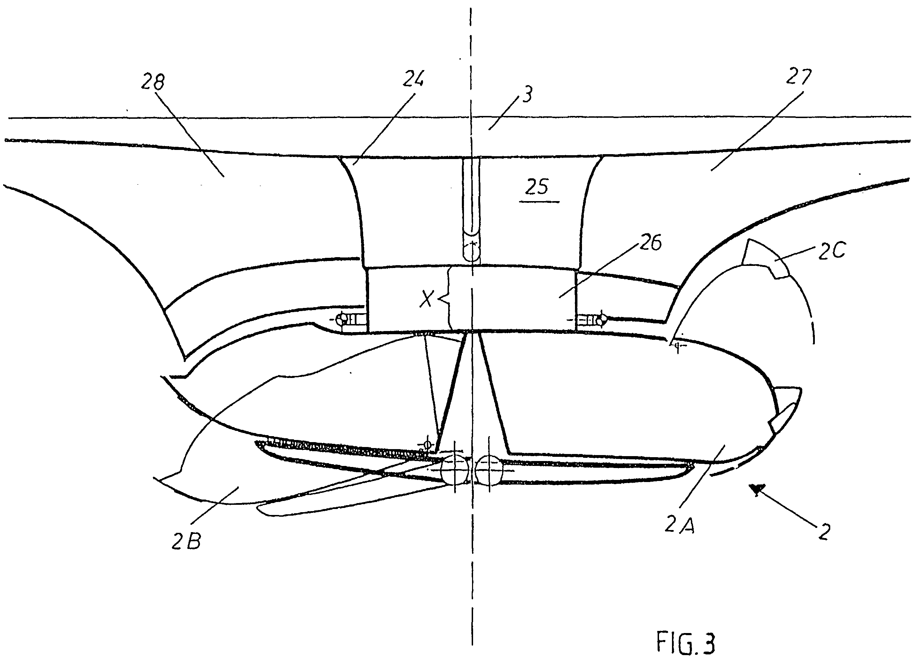

Die in Fig. 1 A in der Perspektive gezeigte Trägerverkleidung 24 ist in den Fign. 2 und 3 in einem Querschnitt durch die Mittelgepäckablagen ersichtlich. Der Träger 6 ist von der Trägerverkleidung 24 vollständig umhüllt und nicht mehr ersichtlich. Ausgehend vom Deckenbereich 3, an dem das äußere Verkleidungsteil 25 angeordnet ist, umschließt diese Verkleidung 25 eine innere Umkleidung 26, die an der Mittelgepäckablage 2 angrenzt. Um einen harmonischen Raumeindruck zu erhalten, sind Deckenverkleidungselemente 27 und 28 im Deckenbereich 3 angeordnet, die der Außenkontur der Gepäckablagen 2 angepaßt sind und sich so die Gepäckablagen 2 in die gesamte Deckenkontur der Flugzeugkabine 1 harmonisch einfügen.

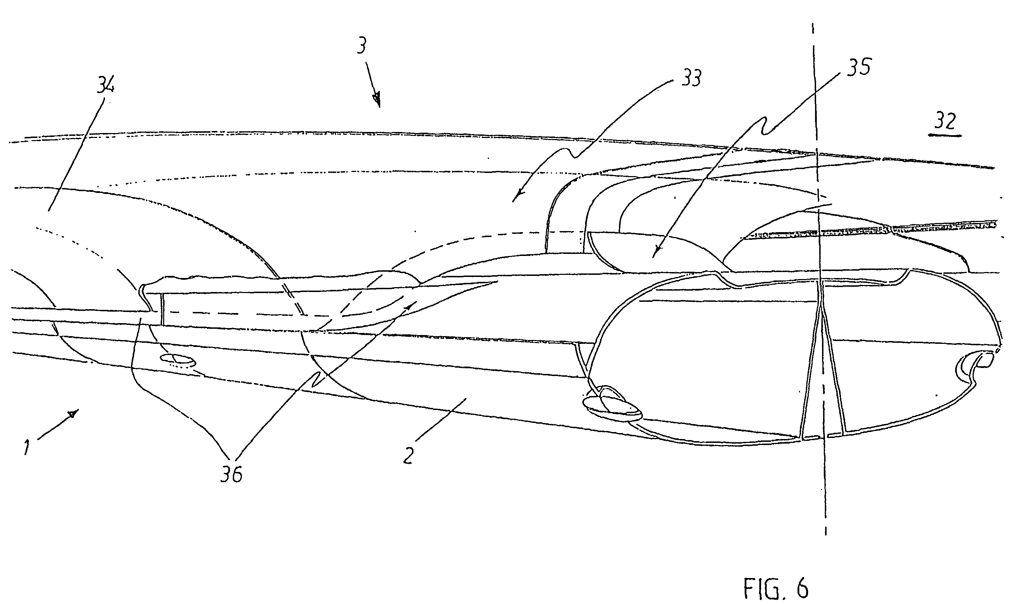

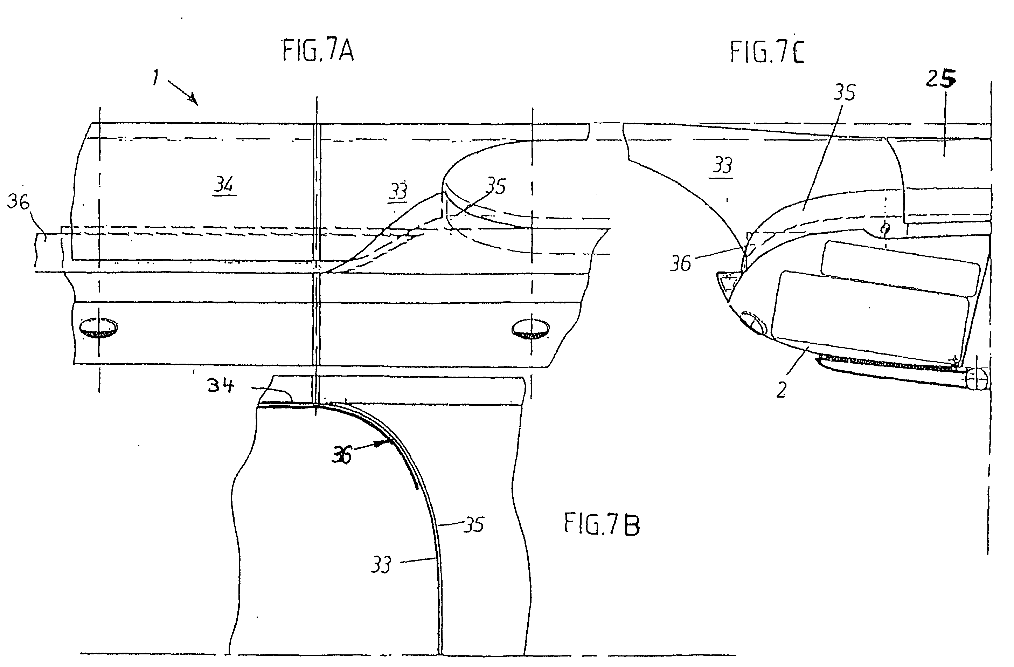

Die Fig. 2 zeigt eine Gepäckablage 2 größeren Typs, die Fig. 3 zeigt die Gepäckablage 2A kleineren Typs. Die Verkleidungsteile 25 und 26 sind in der Ausgestaltung mit der kleineren Gepäckablage 2A auseinandergezogen mit einem Abstand x. Ersichtlich ist auch, daß die linke Gepäckablage 2 eine absenkbare Schale 2B aufweist. Auf der rechten Seite ist eine Gepäckablage 2 ohne Absenkung mit einer hochschwenkbaren Klappe 2C ersichtlich. Damit ist gezeigt, daß unterschiedlichste Varianten von Gepäckablagenanordnungen modular in einer Flugzeugkabine realisiert werden können. Bei einer Höhenverstellung der Gepäckablagen 2 während einer Umrüstung bzw. bei einer Umrüstung von kleinen auf große Gepäckablagen bzw. von Gepäckablagen mit absenkbarer Schale auf feste Gepäckablagen könnte das Problem auftreten, daß die weiteren Verkleidungsteile in der Flugzeugkabine 1, die von der Höhenverstellung betroffen sind, nicht mehr miteinander korrelieren und zusätzliche Anpassungsarbeiten notwendig wären. Mit beispielweise einer überlappenden Anordnung von Verkleidungsteilen (siehe Deckenpanel 30 und Abdeckleiste 31 in Fig. 1) sind Ausgleichsmöglichkeiten geschaffen, die das geschilderte Problem lösen. Eine weitere Möglichkeit ist aus Fig. 3 zu entnehmen, wobei die Deckenverkleidungselemente 27 und 28 teleskopieren, um entsprechend der Absenkung der Gepäckablage 2 oder Umrüstung von einer Gepäckablage auf eine andere Art mit anderen Außenabmessungen die Differenzhöhe abzudecken. Eine weitere Ausführung bei einer Konturänderung des Deckenbereichs der Passagierkabine 1, die im Bereich der Mittelgepäckablage 2 besondere Anpassungen benötigt, um entstehende Spalte abzudecken ist in den Fign. 6 und 7 erläutert.

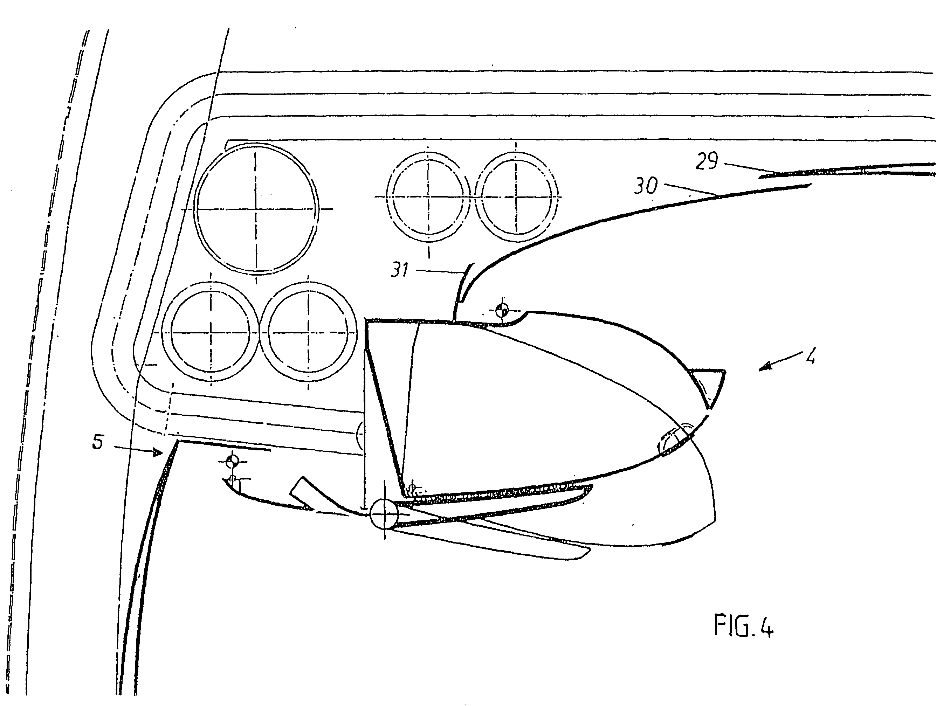

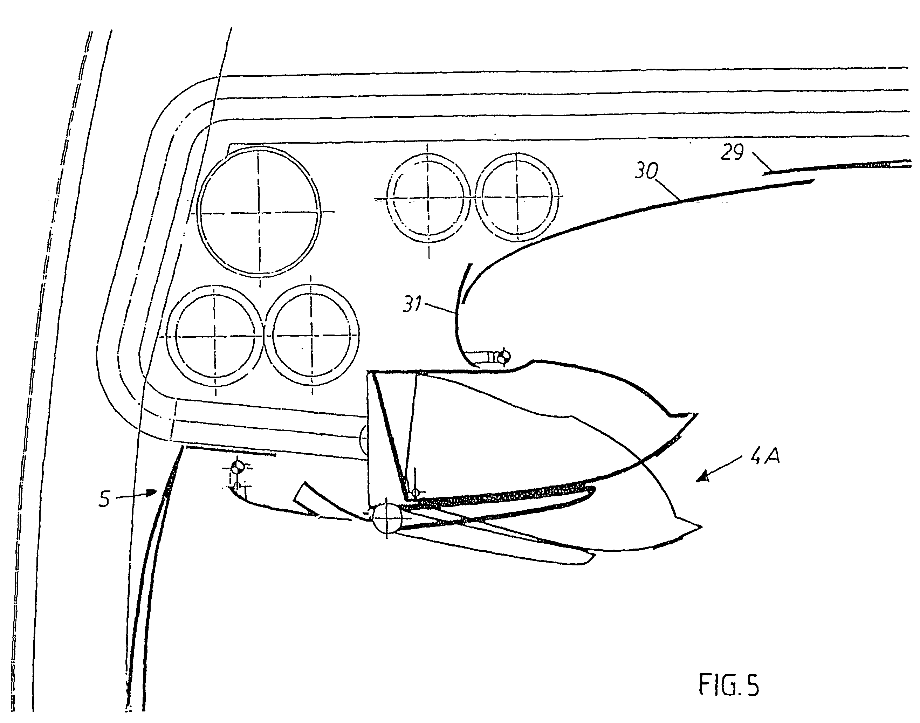

In den Fign. 4 und 5 ist die Seitengepäckablage 4 in einem Querschnitt gezeigt, wobei die Fig. 5 die kleiner Seitengepäckablage 4A und die Fig. 4 die Seitengepäckablage 4 zeigt. Die Deckenpanels 29 und 30 sind jeweils mit einem Ende überlappend angeordnet. Im Randbereich von Deckenpanel 30 zur Seitenwandverkleidung, die die Kontur der Seitengepäckablage 4 mitberücksichtigt, ist eine Abdeckleiste 31 vorgesehen, die bei einer Höhenänderung der Gepäckablage 4 (aufgrund Höhenverstellung oder aufgrund der Änderung der Gepäckablagengröße) zwischen Deckenpanel 30 und Oberseite der Gepäckablage 4 einen Ausgleich schafft. Die zur Seitenwand 5 hinweisende Kante des Deckenpanels 30 ist mit der Abdeckleiste 31 überlappend angeordnet.

Im Anschlußbereich der Mittelgepäckablage 2 zur Deckenverkleidung der Passagierkabine 1 ist in den Fign. 6 und 7 ersichtlich, wie der Übergangsbereich zwischen einer freihängenden und einer in die Deckenkontur integrierten Mittelgepäckablage 2 gestaltet sein kann. An einer solchen Stelle ist in der Passagierkabine 1 eine Konturänderung im Deckenbereich 3 vorgesehen. In der Perspektive ist in Fig. 6 gezeigt, daß ein Verkleidungsteil 32 mit einer Ausgangskontur an ein Übergangsteil 33 angrenzt, welches den Übergang zu einem Verkleidungsteil 34 mit einer neuen Deckenkontur realisiert. Dieses Übergangsteil 33 ist in den Fign. 7A bis 7C in Ansichten von der Seite ersichtlich. Bei einer Höhenverstellung der Gepäckablagen 2 ist es im Bereich einer Deckenkonturänderung am Übergangsteil 33 notwendig, entstehende Spalte abzudekken. Dafür ist eine Zwischenverkleidung 35 vorgesehen, die an der Oberseite der Gepäckablage 2 verläuft und bei einer Höhenverstellung zum Übergangsteil 33 die Abdeckfunktion realisiert für einen entstehenden Spalt. Im Bereich des Verkleidungsteils 34 mit neuer Deckenkontur ist zur Abdeckung ein leistenförmiges Zaunelement 36 vorgesehen, welches bei einer Höhenverstellung den Bereich zur Gepäckablage 2 für diesen Bereich abdeckt.

### Bezugszeichenliste

- 1 -: Flugzeugpassagierkabine
- 2 -: Mittelgepäckablagen
- 2A -: kleinere Mittelgepäckablage
- 2B -: absenkbare Schale einer Mittelgepäckablage
- 2C -: hochschwenkbare Klappe einer Mittelgepäckablage
- 3 -: Deckenbereich
- 4 -: Seitengepäckablagen
- 4A -: kleinere Seitengepäckablage
- 5 -: Seitenwandbereich
- 5A -: Spant
- 6 -: Träger
- 7 -: Deckenträger
- 8, 9 -: Anschlußelemente der rechten Mittelgepäckablage
- 10, 11 -: Anschlußelemente der linken Mittelgepäckablage
- 12 -: Seitenwand der rechten Mittelgepäckablage
- 13 -: Seitenwand der linken Mittelgepäckablage
- 14, 15, 16, 17 -: Lochraster in den Seitenwänden
- 14A, 14B, 14C, 14D, 14E -: Bohrungen im Lochraster
- 18 -: Träger für Seitengepäckablage
- 19 -: Seitenwand der Seitengepäckablage
- 20, 21 -: Lochraster der Seitengepäckablage
- 22, 23 -: Anschlußelemente für Seitengepäckablage
- 24 -: Trägerverkleidung
- 25 -: aüßerer Verkleidungsteil
- 26 -: innerer Verkleidungsteil
- 27, 28 -: Deckenverkleidungsteile
- 29, 30 -: Deckenpanels
- 31 -: Abdeckleiste
- 32 -: Verkleidungsteil bei Ausgangskontur
- 33 -: Übergangsteil
- 34 -: Verkleidungsteil bei neuer Deckenkontur
- 35 -: Zwischenverkleidung
- 36 -: Zaunelement

## Patentansprüche

1. Gepäckablagenanordnung in einer Flugzeugpassagierkabine (1), die in Flugzeuglängsrichtung anzuordnende Mittelgepäckablagen (2) und Seitengepäckablagen (4) aufweist, wobei die Mittelgepäckablagen (2) im Deckenbereich (3) und die Seitengepäckablagen (4) im Seitenwandbereich (5) anzuordnen sind, und die Gepäckablagen (2, 4) mittels Träger (6, 6', 6", 18) an der Flugzeugstruktur (5A, 7) befestigt sind, wobei die Anschlusselemente (8, 9, 10, 11, 22, 23) vom entsprechenden Trägerende an einer Gehäusewandung (12, 13, 19) der Gepäckablage (2,4) angreifen,
**dadurch gekennzeichnet, dass** Mittel zum Verstellen (14, 15, 16, 17, 21, 21) an der jeweiligen Gehäusewandung (12, 13, 19) vorgesehen sind, um die Gepäckablage (2, 4) zu den Anschlusselementen (8, 9, 10, 11, 22, 23) in unterschiedliche Höhe zu positionieren.

2. Gepäckablagenanordnung nach Anspruch 1,
**dadurch gekennzeichnet, daß**
als Mittel zum Verstellen in den Seitenwänden (12, 13, 19) Lochraster (14, 15, 16, 17, 21, 21) angeordnet sind, die in vorbestimmten Höhen übereinander angeordnete Bohrungen (14A - 14E) aufweisen, wobei in jeweils eine Bohrung eines Lochrasters (14, 15, 16, 17, 21, 21) das entsprechende Anschlußelement (8, 9, 10, 11, 22, 23) einführbar ist, um eine horizontal gleichmäßige Anordnung der Gepäckablagen (2, 4) zu erreichen.

3. Gepäckablagenanordnung nach einem der Ansprüche 1 bis 2
**dadurch gekennzeichnet, daß**
der Träger (6, 6', 6") der Mittelgepäckablage (2) eine Trägerverkleidung (24) aufweist, die aus einem hüllenartigen äußeren Verkleidungsteil (25) und einem inneren Verkleidungsteil (26) besteht, wobei das innere Verkleidungsteil (26) in das äußere Verkleidungsteil (25) einschiebbar ist.

4. Gepäckablagenanordnung nach einem der Ansprüche 1 bis 3
**dadurch gekennzeichnet, dass**
im Deckenbereich (3) Deckenverkleidungspanels (29, 30) anzuordnen sind, wobei im Übergangsbereich von dem einen Deckenverkleidungspanel (29) zu dem weiteren Deckenverkleidungspanel (30) eine Überlappung zum Ausgleich von Höhenverstellungen vorgesehen ist.

5. Gepäckablagenanordnung nach einem der Ansprüche 1 bis 4
**dadurch gekennzeichnet, daß**
im Bereich der Seitengepäckablage (4) die zur Seitenwand (5) hinweisende Kante des Deckenverkleidungspanels (30) mit einer Abdeckleiste (31) überlappend angeordnet ist und die Abdeckleiste (31) an der Oberseite der Seitengepäckablage (4) verläuft:

6. Gepäckablagenanordnung nach einem der Ansprüche 1 bis 5
**dadurch gekennzeichnet, daß**
bei einer Konturänderung im Deckenbereich (3) der Passagierkabine (1) ein Übergangsteil (33) zwischen einem Verkleidungsteil (32) mit einer Ausgangskontur und einem Verkleidungsteil (34) mit neuer Deckenkontur angeordnet ist.

7. Gepäckablagenanordnung nach Anspruch 6
**dadurch gekennzeichnet, daß**
am Übergangsteil (33) eine Zwischenverkleidung (35) zum Übergang zur Oberseite der Gepäckablage (2) vorgesehen ist.

8. Gepäckablagenanordnung nach einem der Ansprüche 6 oder 7
**dadurch gekennzeichnet, daß**
am Verkleidungsteil (34) der neuen Deckenkontur im Übergangsbereich zur Gepäckablage (2) ein Zaunelement (36) vorgesehen ist.

## Claims

1. Luggage bin arrangement in the passenger cabin (1) of an aircraft, which arrangement has central luggage bins (2) and lateral luggage bins (4) which are to be disposed in the longitudinal direction of the aircraft, wherein the central luggage bins (2) are to be disposed in the ceiling region (3) and the lateral luggage bins (4) in the side-wall region (5), and the luggage bins (2, 4) are fastened by means of bearers (6, 6', 6", 18) to the aircraft structure (5A, 7), and wherein the connecting elements (8, 9, 10, 11, 22, 23) of the corresponding bearer end act upon a housing wall (12, 13, 19) of the luggage bin (2, 4),
**characterised in that**
adjusting means (14, 15, 16, 17, 20, 21) are provided on the particular housing wall (12, 13, 19) in order to position the luggage bin (2, 4) at a different height in relation to the connecting elements (8, 9, 10, 11, 22, 23).

2. Luggage bin arrangement according to claim 1,
**characterised in that**
perforated grids (14, 15, 16, 17, 20, 21), which have bores (14A - 14E) disposed one above the other at predetermined heights, are provided in the side walls (12, 13, 19) as adjusting means, it being possible to introduce into one bore, in each case, of a perforated grid (14, 15, 16, 17, 20, 21) the corresponding connecting element (8, 9, 10, 11, 22, 23) in order to achieve a horizontally uniform arrangement of the luggage bins (2, 4).

3. Luggage bin arrangement according to one of claims 1 to 2,
**characterised in that**
the bearer (6, 6', 6") of the central luggage bin (2) has a bearer trim (24) which consists of an envelope-like outer trim part (25) and an inner trim part (26), it being possible to insert the inner trim part (26) into the outer trim part (25).

4. Luggage bin arrangement according to one of claims 1 to 3,
**characterised in that**
ceiling trim panels (29, 30) are to be arranged in the ceiling region (3), an overlap being provided in the region of transition from one ceiling trim panel (29) to the other ceiling trim panel (30) in order to compensate for height adjustments.

5. Luggage bin arrangement according to one of claims 1 to 4,
**characterised in that**,
in the region of the lateral luggage bin (4), that edge of, the ceiling trim panel (30) which points towards the side wall (5) is arranged in a manner overlapping with a covering strip (31), and said covering strip (31) extends on the upper side of the lateral luggage bin (4).

6. Luggage bin arrangement according to one of claims 1 to 5,
**characterised in that**,
where there is a change of contour in the ceiling region (3) of the passenger cabin (1), a transitional part (33) is arranged between a trim part (32) having an initial contour and a trim part (34) having the new ceiling contour.

7. Luggage bin arrangement according to claim 6,
**characterised in that**
an intermediate trim (35) is provided on the transitional part (33) for the purpose of transition to the upper side of the luggage bin (2).

8. Luggage bin arrangement according to one of claims 6 or 7,
**characterised in that**,
a fence element (36) is provided on the trim part (34) of the new ceiling contour in the region of transition to the luggage bin (2).

## Revendications

1. Système de coffres à bagages pour la cabine d'un avion de passagers (1) qui présente, dans la direction longitudinale de l'avion, un coffre à bagage central (2) et un coffre à bagages latéral (4), le coffre à bagages central (2) devant être disposé dans la zone de plancher (3) et le coffre à bagages latéral (4) dans la zone de la paroi latérale (5), les coffres à bagages (2, 4) étant fixés à la structure d'avion (5A, 7) à l'aide de supports (6, 6', 6'', 18), les éléments de raccordement (8, 9, 10, 11, 22, 24) de l'extrémité de support correspondante étant adjacents à une paroi de boîtier (12, 13, 19) des coffres à bagages (2, 4),
**caractérisé en ce que**
des moyens de réglage (14, 15, 16, 17, 21, 21) ont été prévus contre la paroi de boîtier (12, 13, 19) respective afin de positionner le coffre à bagages (2, 4) à une hauteur variable par rapport aux éléments de raccordement (8, 9, 10, 11, 22, 23).

2. Système de coffres à bagages selon la revendication 1,
**caractérisé en ce que**
des grilles perforées (14, 15, 16, 17, 21, 21) présentant, à des hauteurs prédéterminées, des alésages (14A - 14E) superposés ont été prévues comme moyens de réglage dans les parois latérales (12, 13, 19), un élément de raccordement (8, 9, 10, 11, 22, 23) pouvant être introduit dans un alésage correspondant d'une grille perforée (14, 15, 16, 17, 21, 21) afin que les coffres à bagages (2, 4) soient disposés horizontalement de façon homogène.

3. Système de coffres à bagages selon une des revendications 1 à 2,
**caractérisé en ce que**
le support (6, 6', 6'') du coffre à bagages central (2) présente un revêtement porteur (24) constitué d'un élément de revêtement (25) externe en forme de gaine et d'un élément de revêtement interne (26), l'élément de revêtement interne (26) pouvant être inséré dans l'élément de revêtement externe (25).

4. Système de coffres à bagages selon une des revendications 1 à 3,
**caractérisé en ce que**
des panneaux de revêtement de plancher (29, 30) peuvent être disposés dans la zone de plancher (3), un chevauchement destiné à compenser les différences de hauteur ayant été prévu dans la zone de transition entre le premier panneau de revêtement de plancher (29) et l'autre (30).

5. Système de coffres à bagages selon une des revendications 1 à 4,
**caractérisé en ce que**
dans la zone du coffre à bagages latéral (4), l'arête du panneau de revêtement de plancher (30) orientée vers la paroi latérale (5) chevauche un listeau de recouvrement (31) et le listeau de recouvrement (31) s'étend contre la face supérieure du coffre à bagages latéral (4).

6. Système de coffres à bagages selon une des revendications 1 à 5,
**caractérisé en ce que**
en cas de modification de contours dans la zone de plancher (3) de la cabine de passagers (1), un élément de transition (33) a été disposé entre un élément de revêtement (32) à contour initial et un élément de revêtement (34) à contour de plancher neuf.

7. Système de coffres à bagages selon la revendication 6,
**caractérisé en ce que**
un revêtement intermédiaire (35) de passage à la face supérieure du coffre à bagages (2) a été prévu contre l'élément de transition (33).

8. Système de coffres à bagages selon une des revendications 6 ou 7,
**caractérisé en ce que**
un élément de clôture (36) a été prévu contre l'élément de revêtement du nouveau contour de plancher, dans la zone de transition vers le coffre à bagages (2).
